# EUROPEAN PATENT APPLICATION

(11) **EP 4 604 286 A1**
(43) Date of publication of application: **20.08.2025**
(21) Application number: 23895093.5
(22) Date of filing: 24.11.2023
(51) Int. Cl.: H01M 50/184, H01M 50/178, H01M 50/358, H01M 50/105, H01M 50/211

(54) **BATTERY MODULE**

(30) Priority: 25.11.2022 KR 20220160853
(71) Applicant: LG Energy Solution, Ltd., Seoul 07335 (KR)
(72) Inventor: HWANG, Soon Choel, Daejeon 34122 (KR); KIM, Jin Young, Daejeon 34122 (KR); BAEK, Sang Min, Daejeon 34122 (KR); LEE, Sung Won, Daejeon 34122 (KR); SHIN, Hwang Dong, Daejeon 34122 (KR); LEE, Hae Seok, Daejeon 34122 (KR)
(74) Representative: Goddar, Heinz J.
(86) International application number: PCT/KR2023/019166
(87) International publication number: WO 2024/112166

(57) **Abstract**

A battery module according to an embodiment of the present invention may include: a module frame; a plurality of pouch-type battery cells disposed parallel to each other within the module frame; and a plurality of vent holes defined to pass through one surface of the module frame. Each of pouch-type battery cells may include: an electrode assembly provided with an electrode lead; a battery case comprising an accommodation part configured to accommodate the electrode assembly, a short-side sealing part which is disposed on a portion of a circumference of the accommodation part and from which the electrode lead protrudes, and a long-side sealing part disposed on the other portion of the circumference of the accommodation part and folded toward the accommodation part; and a plurality of fixing members attached to the battery case to fix the long-side sealing part in a folded state and arranged to be spaced apart from each other in a longitudinal direction of the long-side sealing part. In each of the vent holes, an area that does not overlap the fixing member may be wider than an area that overlaps the fixing member.

## Description

### TECHNICAL FIELD

### CROSS-REFERENCE TO RELATED APPLICATION

The present application claims the benefit of the priority of Korean Patent Application Nos. 10-2022-0160853, filed on November 25, 2022, and 10-2023-0165914, filed on November 24, 2023, which are hereby incorporated by reference in their entirety.

### TECHNICAL FIELD

The present invention relates to a battery module including a pouch-type battery cell.

### BACKGROUND ART

Unlike primary batteries, secondary batteries may be chargeable and dischargeable and thus may be applied to various fields such as digital cameras, mobile phones, laptops, and hybrid vehicles. Secondary batteries include nickel-cadmium batteries, nickel-metal hydride batteries, nickel-hydrogen batteries, and lithium secondary batteries.

Among these secondary batteries, more researches are in progress on lithium secondary batteries with high energy density and discharge voltage. Recently, lithium secondary batteries have been manufactured as flexible pouched-type battery cells, and a plurality of lithium secondary batteries are connected to each other to be used in a modular format.

In such a pouch-type battery cell, in which a pouch is used as an exterior that surrounds an electrode assembly, the electrode assembly has a structure in which a positive electrode plate, a negative electrode plate, and a separator disposed between the positive electrode plate and the negative electrode plate are stacked. A positive electrode tab is disposed at one side of the positive electrode plate, and a negative electrode tab is disposed at one side of the negative electrode plate. Each of the tabs is connected to an external circuit by being connected to an electrode lead. The electrode assembly is sealed by a pouch that is an exterior.

The pouch includes an accommodation part that accommodates the electrode assembly and a sealing part that is disposed around the accommodation part to seal the electrode assembly. In addition, the electrode lead may protrude from a portion of the sealing part, and a wing folding part may be disposed on the other portion of the sealing part to improve energy density. For example, the wing folding part may be formed by double side folding (DSF). When a predetermined period of time passes, the wing folding part is not maintained in its folded state, and a portion of the wing folding part is unfolded to protrude to the outside. To prevent this phenomenon, the wing folding part may be fixed using a fixing member such as a tape.

However, when flame or a gas is generated due to an abnormal operation of the pouch-type battery cell, there is a problem that the flame or gas may not be discharged toward the wing folding part, but be discharged toward the electrode lead.

Within a battery module or battery pack, when the flame or gas generated from one pouch-type battery cell is discharged toward the electrode lead, the flame may be rapidly spread to the surroundings to cause continuous thermal runaway of adjacent battery cells, and thus, a solution is needed to solve this problem.

### DISCLOSURE OF THE INVENTION

### TECHNICAL PROBLEM

One object of the present invention for solving the above problem is to provide a battery module that delays venting of flame or a gas generated within a pouch-type battery cell toward an electrode lead and smoothly vents the flame or the gas vented from the pouch-type battery cell to the outside.

### TECHNICAL SOLUTION

A battery module according to an embodiment of the present invention may include: a module frame; a plurality of pouch-type battery cells disposed parallel to each other within the module frame; and a plurality of vent holes defined to pass through one surface of the module frame. Each of pouch-type battery cells may include: an electrode assembly provided with an electrode lead; a battery case comprising an accommodation part configured to accommodate the electrode assembly, a short-side sealing part which is disposed on a portion of a circumference of the accommodation part and from which the electrode lead protrudes, and a long-side sealing part disposed on the other portion of the circumference of the accommodation part and folded toward the accommodation part; and a plurality of fixing members attached to the battery case to fix the long-side sealing part in a folded state and arranged to be spaced apart from each other in a longitudinal direction of the long-side sealing part. In each of the vent holes, an area that does not overlap the fixing member may be wider than an area that overlaps the fixing member.

A value obtained by subtracting a total length of the plurality of fixing members from a length of the long-side sealing part may be equal to or greater than a total length of the short-side sealing part.

A distance between the plurality of fixing members may be greater than a length of the fixing member.

A distance between the plurality of fixing members may be greater than a length of each of the short-side sealing parts.

An outermost fixing member of the plurality of fixing members may be disposed to correspond to an end of the accommodation part.

A total length of the plurality of fixing members may be 20% or less of a length of the long-side sealing part.

A total length of the plurality of fixing members may be 17 % or less of a length of the long-side sealing part.

The total length of the plurality of fixing members may be 10% or more of the length of the long-side sealing part.

A length of each of the fixing members may be 3% to 6% of a length of the long-side sealing part.

The vent hole may be provided to be long in a direction parallel to the pouch-type battery cell and has a length longer than the fixing member.

The length of the vent hole may be at least 3 times the length of the fixing member.

With respect to a total area of the plurality of vent holes, an area on which the plurality of fixing members overlap the plurality of vent holes may be less than 1/3.

In each of the vent holes, the area that overlaps the fixing member may be less than 1/3 of the area that does not overlap the fixing member.

The plurality of vent holes may include: a first vent hole overlapping the fixing member; and a second vent hole that does not overlap the fixing member.

The plurality of vent holes may be arranged to form a plurality of rows parallel to a stacking direction of the plurality of pouch-type battery cells, and a distance between the plurality of vent holes in the longitudinal direction of the pouch-type battery cells may be equal to or greater than a length of the fixing member.

Both ends of the vent hole may be rounded to be convex outward.

### ADVANTAGEOUS EFFECTS

According to the preferred embodiment of the present invention, when the fire occurs inside the pouch-type battery cell, the gas and the flame may be vented preferentially from the long-side sealing part rather than the short-side sealing part from which an electrode lead protrudes. As a result, the time taken to vent the gas or flame to the short-side sealing part may be maximally delayed, and the phenomenon in which the flame is quickly spread to the surroundings to cause the continuous thermal runaway of the adjacent battery cell.

In addition, when the pouch-type battery cell normally operates, the long-side sealing part may be reliably maintained in the folded state by the fixing member.

In addition, the gas and the flame, which vented from the long-side sealing part of the pouch-type battery cell, may be smoothly discharged through the vent hole of the module frame.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view of a pouch-type battery cell provided in a battery module according to an embodiment of the present invention.
FIG. 2 is a cross-sectional view taken along line A-A' of FIG. 1.
FIG. 3 is a front view of the pouch-type battery cell illustrated in FIG. 1.
FIG. 4 is a front view illustrating a modified example of the pouch-type battery cell illustrated in FIG. 1.
FIGS. 5a to 5d are front view of a pouch-type battery cell according to a comparative example.
FIG. 6 is a perspective view of a battery module according to an embodiment of the present invention.
FIG. 7 is an exploded perspective view of the battery module illustrated in FIG. 6.
FIG. 8 is a plan view of the battery module illustrated in FIG. 6.
FIGS. 9a and 9b are view illustrating the inside of a battery module according to an experimental example.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

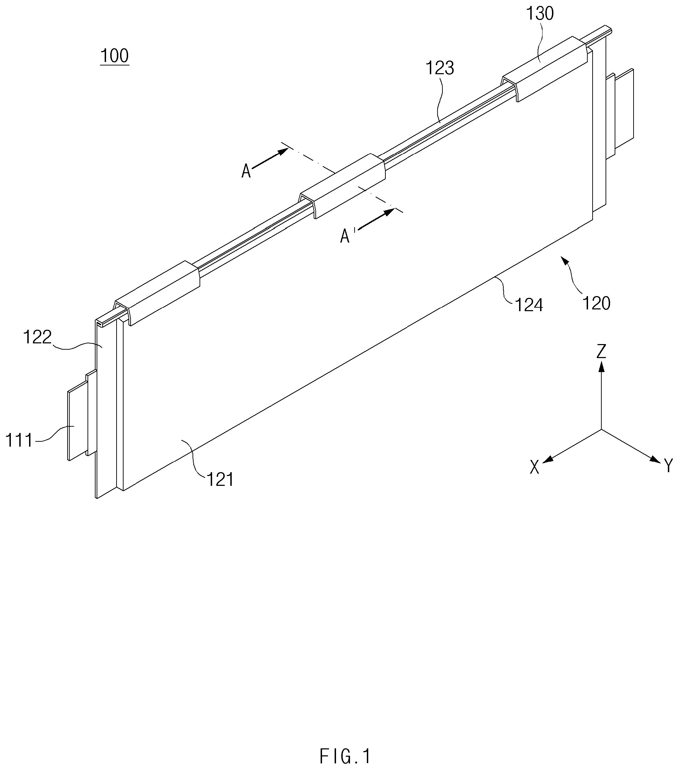

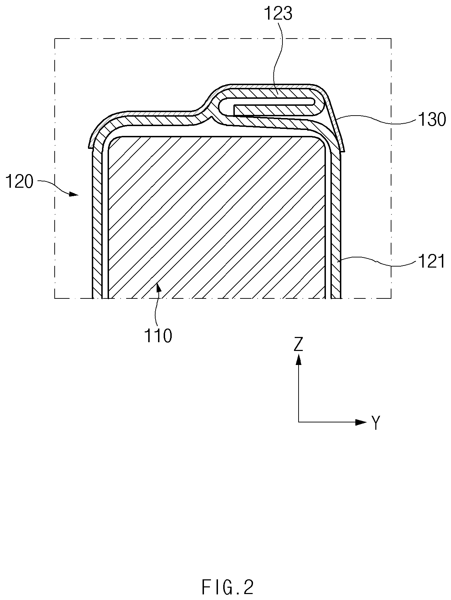

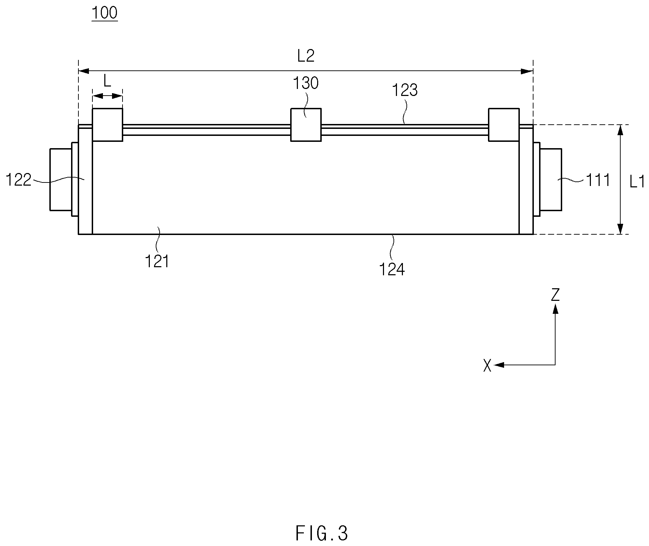

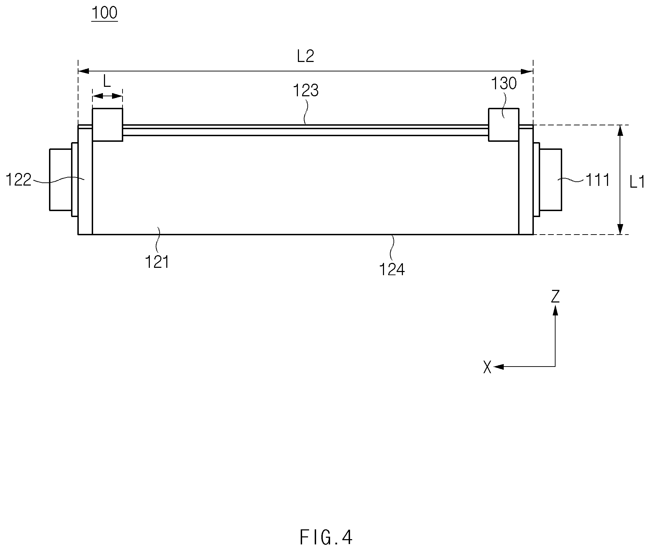

FIG. 1 is a perspective view of a pouch-type battery cell provided in a battery module according to an embodiment of the present invention, FIG. 2 is a cross-sectional view taken along line A-A' of FIG. 1, FIG. 3 is a front view of the pouch-type battery cell illustrated in FIG. 1, and FIG. 4 is a front view illustrating a modified example of the pouch-type battery cell illustrated in FIG. 1.

A pouch-type battery cell 100 (hereinafter, referred to as a "battery cell") described below may be provided in a battery module according to an embodiment of the present invention. The battery cell 100 may include an electrode assembly 110, a battery case 120, and a fixing member 130.

The electrode assembly 110 may be provided by interposing a separator between a positive electrode and a negative electrode, which are disposed alternately. That is, the electrode assembly 110 may include a plurality of electrodes and separators disposed between the plurality of electrodes to insulate the plurality of electrodes from each other. The electrode assembly 110 may be accommodated together with an electrolyte in the battery case 120, and more specifically, in the accommodation part 121 to be described later.

The electrode assembly 110 may be provided in a stack type, jelly-roll type, stack and folding type, and the like, and the type of the electrode assembly is not limited thereto.

The electrode assembly 110 may include an electrode tab connected to each of the positive electrode and the negative electrode, and the electrode tab may serve as a path through which electrons move between the inside and the outside of the electrode assembly 110. The electrode tab may include a positive electrode tab connected to the positive electrode and a negative electrode tab connected to the negative electrode. The positive electrode tab and the negative electrode tab may protrude in different directions from the electrode assembly 110, but are not limited thereto. For example, the positive electrode tab and the negative electrode tab may protrude in various directions, for example, protrude in parallel to each other from one side in the same direction.

The electrode assembly 110 may be provided with an electrode lead 111. The electrode lead 111 may electrically connect the electrode assembly 110 to the outside.

In more detail, the electrode lead 111 may be connected to the electrode tab of the electrode assembly 110 by spot welding or the like. In addition, a portion of the electrode lead 111 may be surrounded by an insulating member. The insulating member may be disposed to correspond to a short-side sealing part 122 of the battery case 120 to be described later. Thus, the insulating member may insulate the electrode lead 111 from a short-side sealing part 122 and maintain the sealing of the short-side sealing part 122. In general, an insulating tape that is easy to be attached to the electrode lead 111 and has a relatively thin thickness is often used as the insulating member, but is not limited thereto.

The electrode lead 111 may have one end connected to the electrode tab and the other end protruding to the outside of the battery case 120. The electrode lead 111 may include a positive electrode lead connected to the positive electrode tab and a negative electrode lead connected to the negative electrode tab. Since the positive electrode tab and the negative electrode tab protrude in various directions, the positive electrode lead and the negative electrode may also extend in various directions.

The battery case 120 may be provided by molding a laminate sheet and may accommodate the electrode assembly 110 therein.

The battery case 120 may include a pair of cases connected to each other through a bridge before the sealing or in a state in which the sealing is released, and an accommodation part 121 may be recessed and molded in at least one of the pair of cases. In addition, when the bridge is folded in the state in which the electrode assembly 110 is accommodated in the accommodation part 121, terraces of the pair of cases may be in contact with each other and be sealed on three sides by thermal fusion. In this case, the bridge may provide a folding part 124, and the terraces may define a sealing parts 122 and 123.

However, it is not limited thereto, and the pair of cases may be separate members. In this case, the terraces of the pair of cases may be in contact with each other and may be sealed on four sides by thermal fusion. The configuration of this cell case is a well-known technology and will be easily understood by the person skilled in the art.

The battery case 120 may include an accommodation part 121 that accommodates the electrode assembly 110, a short-side sealing part 122 which is disposed on a portion of a circumference of the accommodation part 121 and from which the electrode lead 111 protrudes, and a long-side sealing part 123 disposed on the other portion of the circumference of the accommodation part 121 and folded toward the accommodation part 121.

The accommodation part 121 may have a pocket shape and may accommodate the electrode assembly 111 therein.

The short-side sealing part 122 may be disposed on a portion of the circumference of the accommodation part 121. For example, the short-side sealing part 122 may be disposed at both sides in a full-length direction of the accommodation part 121 to extend in a full-width direction. The electrode lead 111 may protrude out of the battery case 120 through the short-side sealing part 122.

The long-side sealing part 123 may be disposed on the other portion of the circumference of the accommodation part 121. For example, the long-side sealing part 123 may be disposed at one side of the accommodation part 121 in the full-width direction and may extend in the full-length direction. The long-side sealing part 123 may connect both the short-side sealing parts 122 to each other. The long-side sealing part 123 may be disposed at an opposite side of the folding part 124. The long-side sealing part 123 may be a portion from which the electrode lead 111 does not protrude.

In a process of manufacturing the battery case, since the long-side sealing part 123 is sealed later than the short-side sealing part 122, corners of the sealing parts 122 and 123 may be included in the long-side sealing part 123.

The long-side sealing part 123 may be folded toward the accommodation part 121 at least once. Preferably, the long-side sealing part 123 may be double side folded (DSF).

The fixing member 130 may be attached to the battery case 120 to fix the long-side sealing part 123 in the folded state. That is, the fixing member 130 may fix the long-side sealing part 123 in the folded state. For example, the fixing member 130 may be an adhesive tape.

The fixing member 130 may be provided in plurality. The plurality of fixing members 130 may be arranged at a predetermined interval from each other in a longitudinal direction of the long-side sealing part 123.

In more detail, the plurality of fixing members 130 may include a pair of outermost fixing members and at least one intermediate fixing member disposed between the pair of outermost fixing members. However, it is not limited thereto, and as illustrated in FIG. 4, the plurality of fixing members 130 may include only a pair of outermost fixing members.

Lengths L of the plurality of fixing members 130 may be the same, but are not limited thereto.

If ignition occurs in the battery cell 100, more specifically in the electrode assembly 110, the battery case 120 may be damaged, and thus, a gas may be discharged together with spark or particles. Here, when the gas is discharged toward the electrode lead 111, there is a risk that heat and flame are spread quickly to other surrounding battery cells 100, and thus, a configuration is needed to minimize this concern.

The portion of the long-side sealing part 123, to which the fixing member 130 is attached, may not be swelled and be difficult to vent the gas. On the other hand, the portion of the long-side sealing part 123, to which the fixing member 130 is not attached, may be gradually spread as an internal pressure of the battery case 120 increases, and an internal volume of the battery case 120 increases, and thus, a time taken to cause the venting of the gas may be delayed, and also, the gas may be vented relatively preferentially.

In addition, a portion of the long-side sealing part 123, to which the fixing member 130 is not attached, may be provided with a weakly sealed portion or an unsealed portion that is preferentially broken. However, this embodiment is not limited thereto.

A value obtained by subtracting the total of the lengths L of the plurality of fixing members 130 from a length L2 of the long-side sealing part 123 may be equal to or greater than a total length of the short-side sealing part 122. That is, the total length of the portion of the long-side sealing part 123, to which the fixing member 130 is not attached, may be greater than or equal to the total length of the short-side sealing part 122. The total length of the short-side sealing part 122 may be the sum of the respective lengths L1 of the short-side sealing part 122.

For example, as illustrated in FIG. 3, when the short-side sealing part 122 is disposed at each of both the sides of the accommodation part 121, and three fixing members 130 are attached to the long-side sealing part 123, a conditional expression such as *L*2-3*L*≥2*L*1 may be satisfied.

As a result, the portion of the long-side sealing part 123, to which the fixing member 130 is not attached, may be spread as the internal pressure of the gas increases, and the venting of the gas may be delayed. In addition, a possibility that the gas is preferentially vented through the portion may increase to sufficiently delay the venting of the gas toward the short-side sealing part 122.

A distance between the plurality of fixing members 130 may be greater than the length L of each fixing member 130. The distance between the plurality of fixing members 130 may be greater than each length L1 of the short-side sealing part 122. Thus, when the internal pressure of the battery case 120 increases, the portion of the long-side sealing part 123, which is disposed between the plurality of fixing members 130, may be easily swelled, and thus, the gas may be vented preferentially rather than the short-side sealing part 122.

In the plurality of fixing members 130, the outermost fixing member 130 may be disposed to correspond to the end of the accommodation part 121. An end of the accommodation part 121 may refer to an end in the full-length direction. In more detail, the outermost fixing member 130 may be attached to the end of the accommodation part 121 or may be attached adjacent to the end of the accommodation part 121. As a result, the portion at which the gas is vented in the second sealing part 123 may be disposed at a distance from the first sealing part 122, and the spreading of the flame to the electrode lead 111 may be more reliably delayed.

The total length L of the plurality of fixing members 130 may be 20% or less, preferably 17% or less, of the length L2 of the long-side sealing part 123. If the total length L of the plurality of fixing members 130 is greater than 20% of the length L2 of the long-side sealing part 123, there is a problem that the time taken to vent the gas to the short-side sealing part 122 is not sufficiently delayed.

In addition, the total length L of the plurality of fixing members 130 may be 10% or more of the length L2 of the long-side sealing part 123. If the total length L of the plurality of fixing members 130 is less than 10% of the length L2 of the long-side sealing part 123, it is difficult to sufficiently fix the long-side sealing part 123 in the folded state.

In addition, the length L of each fixing member 130 may be 6% or less of the length L2 of the long-side sealing part 123. As a result, the portion of the long-side sealing part 123, to which the fixing member 130 is not attached, may be easily swelled by the increase in internal pressure of the battery case 120, and an area through which the gas is vented may be evenly provided.

In addition, the length L of each fixing member 130 may be 3% or more of the length L2 of the long-side sealing part 123. As a result, each fixing member 130 may be prevented from being detached by restoring force of the folded long-side sealing part 123.

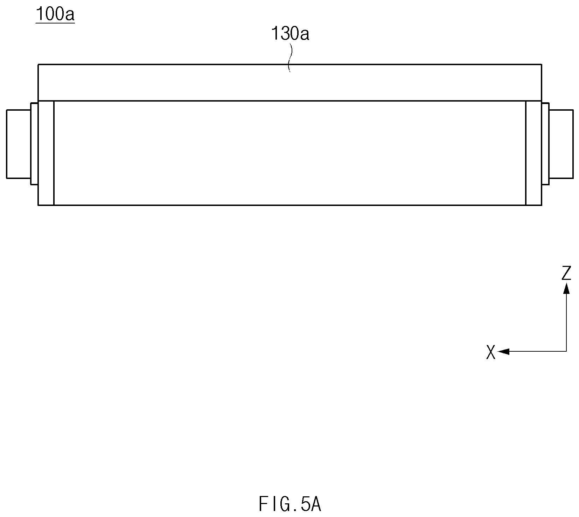

FIGS. 5a to 5d are front view of a pouch-type battery cell according to a comparative example.

Referring to FIG. 5a, since a fixing member 130a of a battery cell 100a according to a first comparative example is attached to an entire long-side sealing part 123, if fire occurs within a battery cell 100a, a gas may be vented almost immediately to a short-side sealing part 122, and thus, a venting delay effect may be minimal.

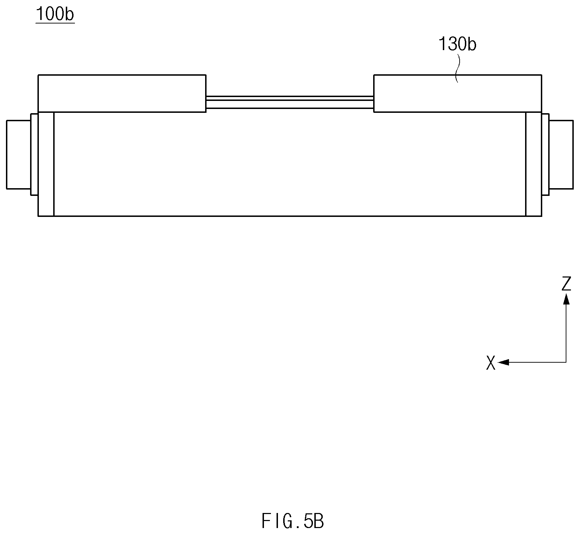

Referring to FIG. 5b, a fixing member 130b of a battery cell 100b according to a second comparative example may be provided to be relatively long in each length, and thus, a length of a portion of a long-side sealing part 123, at which the fixing member 130b is not attached, may not be sufficiently secured. In this case, it is difficult to sufficiently delay venting of a gas to a short-side sealing part 122.

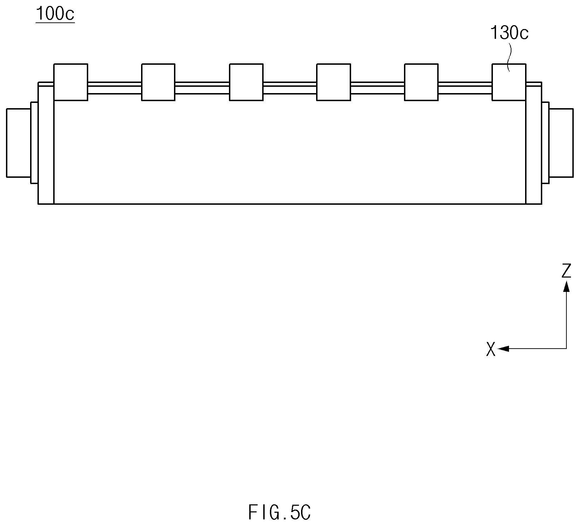

Referring to FIG. 5c, each of fixing members 130c of a battery cell 100c according to a third comparative example may have a relatively short length, but the number of fixing members 130c may be relatively large, and thus, a length of a portion of a long-side sealing portion 123, to which the fixing member 130c is not attached, may not be sufficiently secured. In addition, since a distance between the fixing members 130c is short, it is difficult for the portion between the long-side sealing part 123 and the fixing members 130c to be swelled and for gas to be vented. In this case, it is more difficult to sufficiently delay venting of the gas to a short-side sealing part 122.

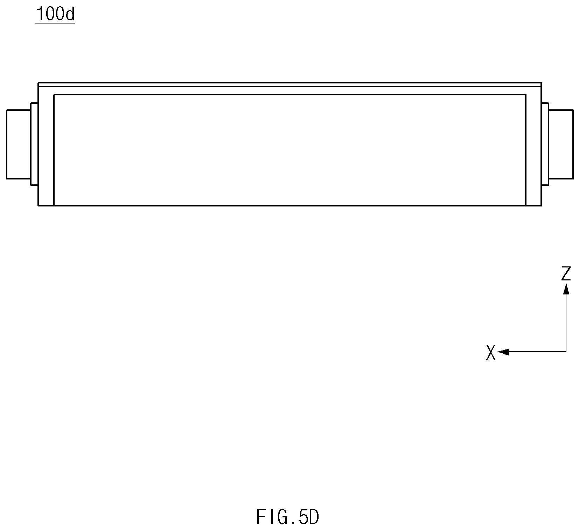

Referring to FIG. 5d, a battery cell 100d according to a fourth comparative example may not be provided with a fixing member in a long-side sealing part 123. In this case, it is difficult to maintain the long-side sealing part 123 in a folded state.

Hereinafter, an experimental example will be described with reference to FIGS. 3, 4, and 5a to 5d.

The inventor(s) measured a time (hereinafter, referred to as a 'delay time') taken to vent a gas from a time point, at which the venting of the gas occurs to a time point, at which the gas is vented in the short-side sealing part 122 while attaching and heating a heating pad at a center of one surface of the accommodation part 121 of the battery ell. The long-side sealing part of the battery case used in each experimental example was treated with double side folding (DSF) at 270 degrees, and the length of the long-side sealing part was 548 mm. In addition, a fixing tape was used as the fixing member.

In the case of the battery cell according to a first experimental example, the long-side sealing part was entirely fixed using a single fixing tape with a length of 548 mm (see FIG. 5a). As a result, the gas was first vented from the short-side sealing part 122, and the delay time was measured to be 0 seconds. In other words, it may be confirmed that there is no flame delay effect.

In the case of the battery cell according to a second experimental example, a fixing tape with a length of 183 mm was attached to each of both the ends of the long-side sealing part divided into three parts (see FIG. 5b). As a result, the delay time was measured to be 4 seconds, and thus, it was confirmed that the battery cell has the flame delay effect. However, there is a disadvantage in guiding the flame and gas into a vent hole defined in a top surface of a module frame to be described later.

In the case of the battery cell according to a third experimental example, two fixing tapes, each of which has a length of 30 mm, were attached at a point that is spaced 31.2 mm from each of both the ends of the long-side sealing part (see FIG. 4). As a result, the delay time was measured to be 8 seconds, and thus, it was confirmed that the battery cell has the flame delay effect. However, since a central part of the long-side sealing part is swelled excessively, there is a risk of damaging the battery cell by interfering with the module frame to be described later.

In the case of the battery cell according to a fourth experimental example, two of three fixing tapes, each of which has a length of 30 mm, were attached at a point that is spaced 31.2 mm from each of both the ends of the long-side sealing part, and the rest was attached to the center of the long-side sealing part (see FIG. 3). As a result, the delay time was measured to be 4 seconds, and thus, it was confirmed that the battery cell has the flame delay effect.

In the case of the battery cell according to a fifth experimental example, two of six fixing tapes, each of which has a length of 30 mm, were attached at a point that is spaced 31.2 mm from each of both the ends of the long-side sealing part, and the remaining four fixing tapes was attached at equal intervals (see FIG. 5c). As a result, the gas was first vented from the short-side sealing part 122, and the delay time was measured to be 0 seconds. In other words, it may be confirmed that there is no flame delay effect.

In the case of the battery cell according to a sixth experimental example, the fixing tape was not attached to the long-side sealing part (see FIG. 5d). As a result, the delay time was measured to be 10 seconds, and thus, it was confirmed that the battery cell has the flame delay effect. However, there is a problem that the long-side sealing part is not fixed.

According to these experimental examples, it was confirmed that the battery cell 100 according to an embodiment of the present invention minimizes side effects while having the flame delay effect (fourth experimental example). In addition, it was confirmed that the battery cell 100 according to the modified example is also useful as the battery cell 100 alone (third experimental example).

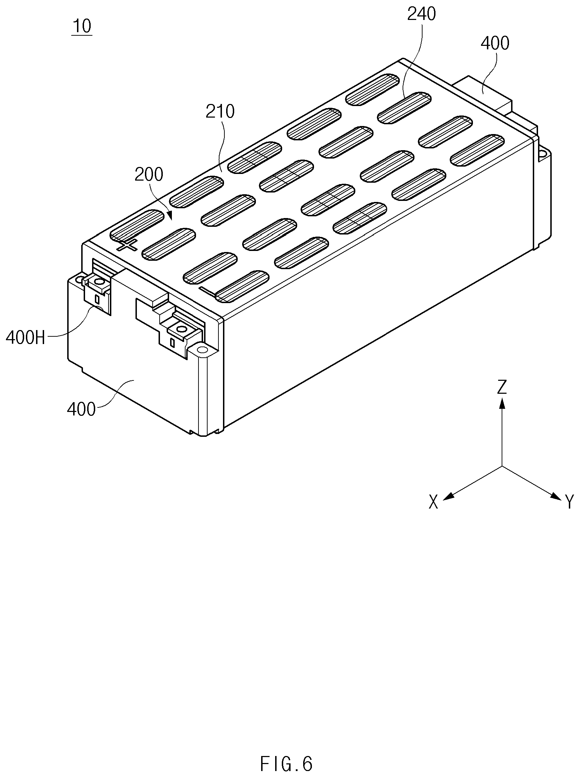

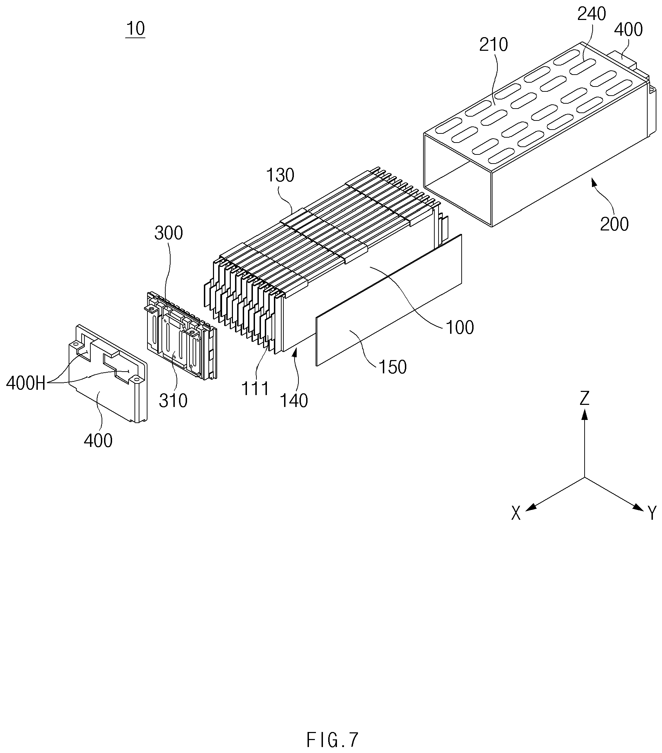

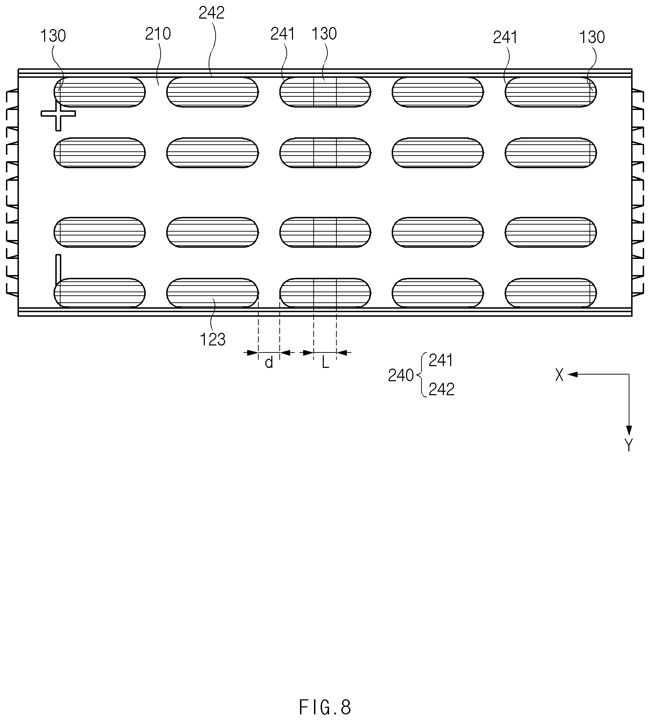

FIG. 6 is a perspective view of a battery module according to an embodiment of the present invention, FIG. 7 is an exploded perspective view of the battery module illustrated in FIG. 6, and FIG. 8 is a plan view of the battery module illustrated in FIG. 6.

A battery module 10 according to an embodiment of the present invention may include a plurality of battery cells 100 and a module frame 200.

The plurality of battery cells 100 may be accommodated in the module frame 200. The plurality of battery cell 100 may be disposed side by side with each other.

The plurality of battery cells 100 may be stacked on each other. The plurality of battery cells 100 stacked on each other may constitute a battery cell stack 140. In addition, the battery cell stack 140 may be provided with at least one heat dissipation pad 150. The heat dissipation pad 150 may dissipate heat from the battery cell 100. The heat dissipation pad 150 may be disposed between the plurality of battery cells 100 or may be disposed to cover the outermost battery cell 100.

The module frame 200 may define an appearance of the battery module 10. The module frame 200 may be made of a metal material with high strength.

A structure of the module frame 200 may vary. As an example, the module frame 200 may be a mono frame. The mono frame may be a metal plate in which top, bottom, and both surfaces are integrated with each other. As another example, the module frame 200 may have a structure in which a U-shaped frame and an upper plate (top surface) are coupled to each other. The U-shaped frame may be a metal plate in which a lower plate (bottom surface) and side plates (both side surfaces) are coupled to or integrated with each other. In addition, the structure of the module frame 200 may be provided as a structure in which L-shaped frames are coupled to each other, and may also be provided in various structures that are not described in the above examples.

The module frame 200 may have an internal space, and the battery cell stack 140 may be accommodated in the internal space. In more detail, the module frame 200 may include a top surface, a bottom surface, and both side surfaces. Both ends of the module frame 200 in a full-length direction may be opened and may be covered by end plates 400 to be described later.

A plurality of vent holes 240 may be defined in one surface 210 of the module frame 200, preferably on the top surface. If ignition occurs in the battery cell 100 within the module frame 200, a gas and flame may be quickly discharged through the vent holes 240.

Each of the vent holes 240 may be defined to be long in a direction parallel to the battery cell 100.

Both ends of each vent hole 240 may be rounded to be convex outward. As a result, an open area of the vent hole 240 may increase while reducing stress concentration near a corner of the vent hole 240.

The plurality of vent holes 240 may be arranged to form a plurality of rows parallel to a stacking direction of the plurality of pouch-type battery cells 100. For example, as illustrated in FIG. 8, the plurality of vent holes 240 may be arranged in five rows parallel to the stacking direction of the pouch-type battery cells 100. Thus, a predetermined distance d may be defined between the two vent holes 240 in the adjacent rows in a longitudinal direction of the pouch-type battery cell 100.

The battery module 10 may further include a busbar frame 300 and an end plate 400.

The busbar frame 300 may be disposed at each of both sides of the battery cell stack 120 in the full-length direction. At least one busbar 310 may be mounted on the busbar frame 300, and each busbar 310 may be connected to an electrode lead 111 of the battery cell 100. The busbar 310 may be configured to electrically connect the plurality of battery cells 100 to an external device.

The end plate 400 may be disposed outside the busbar frame 300. That is, the busbar frame 300 may be disposed between the battery cell stack 120 and the end plate 400.

The end plate 400 may be coupled to the module frame 200. The end plate 400 may cover both the open ends of the module frame 200. An opening 400H may be defined in the end plate 400, and the busbar 310 may be electrically connected through the opening 400H. That is, the busbar 310 of one battery module 10 may be electrically connected to the other battery module 10 or a battery disconnect unit (BDU) through the opening 400H.

There is a risk that the plurality of fixing members 130 of the battery cell 100 interfere with discharge of a gas through the vent hole 240. To resolve this concern, an area that does not overlap the fixing member 130 in each of the vent holes 240 may be wider than an area that overlaps the fixing member 130. That is, each vent hole 240 may not overlap the fixing member 130, or less than half of the area of the vent hole 240 may overlap the fixing member 130. Thus, a gas vented from the battery cell 100 may be smoothly vented into the vent hole 240.

In more detail, with respect to the total area of the plurality of vent holes 240, the area on which the plurality of fixing members 130 overlap the plurality of vent holes 240 may be less than 1/3. That is, only 1/3 or less of the total area of the plurality of vent holes 240 may overlap the fixing member 130.

More specifically, the area of each of the vent holes 240 that overlaps the fixing member 130 may be less than 1/3 of the area that does not overlap the fixing member 130 . That is, only 1/3 or less of the area of each vent hole 240 may overlap the fixing member 130. As a result, some vent holes 240 may be prevented from being blocked by the fixing member 130, and all vent holes 240 may be opened evenly to improve the reliability of gas venting.

The vent hole 240 may have a longer length than the fixing member 130. Preferably, a length of the vent hole 240 may be three times or more than a length L of the fixing member 130. As a result, a position at which the fixing member 130 is attached to the battery case 120 may not be restricted to a position of the vent hole 240 to improve ease of designing and manufacturing the battery cell 100.

A distance d between the plurality of vent holes 240 in the longitudinal direction of the battery cell 100 may be equal to or greater than the length L of the fixing member 30. As a result, a ratio at which the fixing member 130 attached to an arbitrary position of the battery case 120 overlaps the vent hole 240 may be reduced, and rigidity of the module frame 200 may be maintained to be high.

The plurality of vent holes 240 may include a first vent hole 241 that overlaps the fixing member 130 and a second vent hole 242 that does not overlap the fixing member 130. That is, some of the plurality of vent holes 240 may overlap the fixing member 130, and the rest may not overlap the fixing member 130. As a result, while maintaining the venting of the gas through the plurality of vent holes 240 somewhat smoothly, the plurality of vent holes 240 may be defined to prevent from being excessively wide in the module frame 200 and causing the rigidity of the module frame 200 from being excessively low.

However, it is not limited thereto, and in another embodiment, it is also possible for the plurality of vent holes 240 to include only the first vent hole 241 or only the second vent hole 242 through appropriate arrangement of the plurality of vent holes 240.

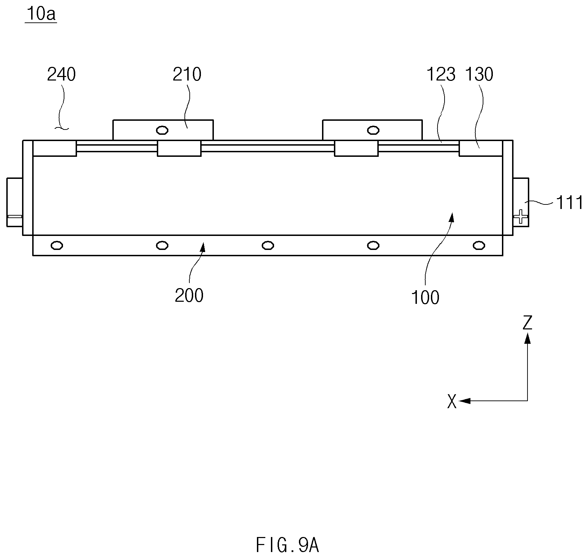

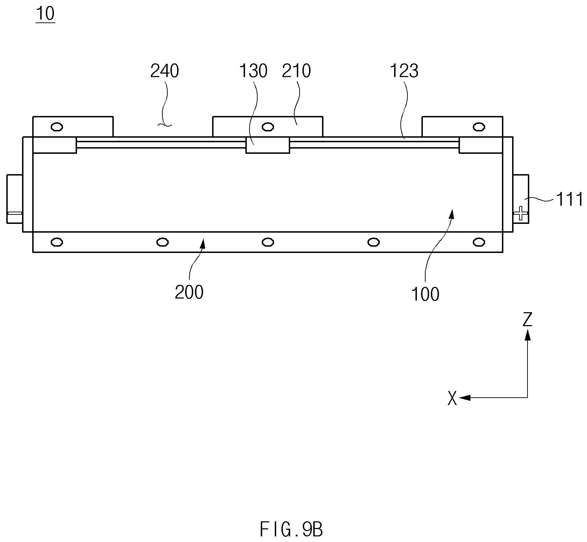

FIGS. 9a and 9b are view illustrating the inside of a battery module according to an experimental example.

Conditions of the experimental examples related to the battery module described below are the same as the experimental examples related to the battery cell described above.

In the case of the battery module according to the first experimental example, two of four fixing tapes, each of which has a length of 30 mm, were attached at a point that is spaced 31.2 mm from each of both the ends of the long-side sealing part, and the remaining two fixing tapes were attached at equal intervals. In addition, a module frame having three vent holes was used, and as a result, more than half of the outermost vent hole overlapped the fixing tape (see FIG. 9a). As a result, in the first stage, the delay time was measured as 0 seconds, and in the second stage, the delay time was measured as 4.7 seconds, and thus it was confirmed that the flame delay effect appears randomly.

In the case of the battery module according to the first experimental example, two of three fixing tapes, each of which has a length of 30 mm, were attached at a point that is spaced 31.2 mm from each of both the ends of the long-side sealing part, and the remaining one fixing tape was attached to a center of the long-side sealing part. In addition, the module frame having two vent holes was used, and as a result, the entire vent hole did not overlap the fixing tape (see FIG. 9b). As a result, the delay time was measured at 5.2 seconds in the first stage, and the delay time was measured at 10.4 seconds in the second stage, and thus, it was confirmed that it had a flame delay effect.

According to these experimental examples, it was confirmed that the battery module 10 according to an embodiment of the present invention has a reliable flame delay effect (second experimental example).

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

### [Description of the Symbols]

| | |
|---|---|
| 10: Battery module | 100: Pouch-type battery cell |
| 110: Electrode assembly | 111: Electrode lead |
| 120: Battery case | 121: Accommodation part |
| 122: Short-side sealing part | 123: Long-side sealing part |
| 124: Folding part | 130: Fixing member |
| 200: Module frame | 210: One surface (module frame) |
| 240: Vent hole | |

## Claims

1. A battery module comprising:
a module frame;
a plurality of pouch-type battery cells disposed parallel to each other within the module frame; and
a plurality of vent holes defined to pass through one surface of the module frame,
wherein each of the plurality of pouch-type battery cells comprises:
an electrode assembly provided with an electrode lead;
a battery case comprising an accommodation part configured to accommodate the electrode assembly, a short-side sealing part which is disposed on a portion of a circumference of the accommodation part and from which the electrode lead protrudes, and a long-side sealing part disposed on the other portion of the circumference of the accommodation part and folded toward the accommodation part; and
a plurality of fixing members attached to the battery case to fix the long-side sealing part in a folded state and arranged to be spaced apart from each other in a longitudinal direction of the long-side sealing part,
wherein, in each of the plurality of vent holes, an area that does not overlap the fixing member is wider than an area that overlaps the fixing member.

2. The battery module of claim 1, wherein a value obtained by subtracting a total length of the plurality of fixing members from a length of the long-side sealing part is equal to or greater than a total length of the short-side sealing part.

3. The battery module of claim 1, wherein a distance between the plurality of fixing members is greater than a length of the fixing member.

4. The battery module of claim 1, wherein a distance between the plurality of fixing members is greater than a length of each of the short-side sealing parts.

5. The battery module of claim 1, wherein an outermost fixing member of the plurality of fixing members is disposed to correspond to an end of the accommodation part.

6. The battery module of claim 1, wherein a total length of the plurality of fixing members is 20% or less of a length of the long-side sealing part.

7. The battery module of claim 1, wherein a total length of the plurality of fixing members is 17 % or less of a length of the long-side sealing part.

8. The battery module of claim 6 or 7, wherein the total length of the plurality of fixing members is 10% or more of the length of the long-side sealing part.

9. The battery module of claim 1, wherein a length of each of the plurality of fixing members is 3% to 6% of a length of the long-side sealing part.

10. The battery module of claim 1, wherein the vent hole is provided to be long in a direction parallel to the pouch-type battery cell and has a length longer than the fixing member.

11. The battery module of claim 10, wherein the length of the vent hole is at least 3 times the length of the fixing member.

12. The battery module of claim 1, wherein, with respect to a total area of the plurality of vent holes, an area on which the plurality of fixing members overlap the plurality of vent holes is less than 1/3.

13. The battery module of claim 1, wherein in each of the plurality of vent holes, the area that overlaps the fixing member is less than 1/3 of the area that does not overlap the fixing member.

14. The battery module of claim 1, wherein the plurality of vent holes comprises:
a first vent hole overlapping the fixing member; and
a second vent hole that does not overlap the fixing member.

15. The battery module of claim 1, wherein the plurality of vent holes are arranged to form a plurality of rows parallel to a stacking direction of the plurality of pouch-type battery cells, and
a distance between the plurality of vent holes in the longitudinal direction of the pouch-type battery cells is equal to or greater than a length of the fixing member.

16. The battery module of claim 1, wherein both ends of the vent hole are rounded to be convex outward.
